# EUROPEAN PATENT SPECIFICATION

(11) **EP 3 822 486 B1**
(45) Date of publication and mention of the grant of the patent: **07.06.2023**
(21) Application number: 19208869.8
(22) Date of filing: 13.11.2019
(51) Int. Cl.: F04B 35/04, F04B 39/00, F04B 39/12, F04B 39/14

(54) **END ELEMENT FOR THE STATOR OF AN ELECTRIC MOTOR OF A HERMETICALLY SEALED REFRIGERANT COMPRESSOR**
ENDELEMENT FÜR DEN STATOR EINES ELEKTROMOTORS EINES HERMETISCH ABGEDICHTETEN KÄLTEMITTELVERDICHTERS
ÉLÉMENT D'EXTRÉMITÉ POUR LE STATOR D'UN MOTEUR ÉLECTRIQUE D'UN COMPRESSEUR RÉFRIGÉRANT FERMÉ HERMÉTIQUEMENT

(43) Date of publication of application: 19.05.2021
(73) Proprietor: Secop GmbH, 24941 Flensburg (DE)
(72) Inventor: Da Silva Castro, Mattias, 8042 Graz (AT); Saars, Thomas, 24969 Großenwiehe (DE); Svajda, Vladimir, 94201 Surany (SK)
(74) Representative: KLIMENT & HENHAPEL

(56) References cited:
- WO-A1-2017/137328
- AT-U1- 9 772
- KR-A- 20110 089 745
- US-A- 5 435 702

## Description

### FIELD OF THE INVENTION

The present invention relates to a refrigerant compressor comprising a hermetically sealed housing and a drive unit disposed in the interior of the housing, the drive unit comprising an electric motor with a stator, wherein an end element is mounted on the stator,
- whereas the end element comprises at least one isolating element which covers an axial end portion of the stator and isolates a stator core and stator windings,
- whereas the isolating element has a ring-like structure,
- whereas the end element comprises several spring holders,
- whereas each spring holder holds a spring which springs support the electric motor in a housing of the hermetically sealed refrigerant compressor,
- whereas the spring holders extend radially outside the isolating element,
- whereas the spring holders are oriented parallel to the axis of the isolating element and an insertion part of each spring holder extends in a first axial direction beyond the neighbouring area of the isolating element,
- whereas the spring holders and the isolating element are integral parts of the end element.

The end element of the present invention is favourably used as a lower end element.

The drive unit of a refrigerant compressor normally comprises a piston/cylinder unit for cyclical compression of a refrigerant, and an electric motor to drive the piston/cylinder unit. The electric motor comprises a stator and a rotor, whereas the rotor, especially an interior permanent magnet rotor, is situated inside the stator.

### PRIOR ART

A respective end element is known from US 2009/0068030 A1. To achieve the goal of simplifying the design of the spring mounting the end element (here called end plate) of the stator comprises at least one integrated first spring holder (here called spring retainer). According to US 2009/0068030 A1 it is thus possible, particularly in connection with small compressors whose low refrigeration output only requires a small drive motor, to realise a relatively simply designed spring retainer, in which no additional threaded bores, screws, mounting fittings or the like are required. The spring retainers are made in one piece with the end plate of the stator. The end element is normally made of plastic.

The spring holders disclosed in US 2009/0068030 A1 lie radially outside of the remaining ring-like end element. The stator normally is rigidly connected to the bearing of the shaft and to the piston/cylinder unit. The stator and accordingly the spring holders thus bear the whole weight of the drive unit and the spring holders also have to carry additional load, e.g. due to an acceleration when the compressor is transported within a vehicle, or during start and stop of the compressor. The spring holders transfer the load to spring members, normally helical springs, which spring members are mounted inside the compressor housing and which transfer the load to the compressor housing and/or mounting elements outside the compressor housing for mounting the compressor into a refrigerating unit. So the connection between a spring holder and the remaining end element has to bear not only the weight of the drive unit but also additional load.

AT 9772 U1 discloses a compressor with a drive unit, the drive unit being supported on cylindrical springs which are held on supporting elements. The springs are enclosed by deep-drawn protrusions of the housing. The longitudinal axes of the springs can be oriented vertical or tilted. AT 9772 U1 does not disclose an end element which covers the stator and which is connected to the supporting elements.

KR 2011 0089745 A discloses a compressor with an upper and a lower insulator which have a ring-like structure. KR 2011 0089745 A does not disclose any spring holders according to claim 1.

### OBJECT OF THE INVENTION

It is therefore an object of the invention to provide an end element which is apt to relieve the connection between spring holder and remaining end element from load and/or to give additional support to the spring holder in the loaded state.

### PRESENTATION OF THE INVENTION

The invention relates to a refrigerant compressor according to claim 1.

Tiltable here means that the spring holders can be tilted to a certain extent against the isolating element, i.e. until they touch the lateral surface of the stator in the operational state, and the mechanical connection between spring holder and isolating element does not break or get otherwise damaged. So the connection between spring holder and isolating element is an elastic connection. The tilt angle, until the extended part of the spring holder touches the lateral surface of the stator, can be in a range between 1° and 10°, for example between 1° and 5°, preferably between 1° and 3°, more preferably between 1° and 2°. The smaller the tilt angle, the smaller is the stress level in the end element, i.e. in the connection between spring holder and isolating element.

The term "axial" here refers either to the axis of the stator, which axis in the operational state is the same as the axis of the rotor, i.e. the axis of rotation of the rotor, or it refers to the axis of the isolating element, which axis is the same as of the stator when the end element is mounted on the stator. The axis of the isolating element is the axis of mathematical rotation of the ring-like isolating element.

That the isolating element is adapted to cover an axial end portion of the stator means that the isolating element is at least also situated at one axial end of the stator. It can cover the front end of the axial end portion and/or the outer lateral surface of the axial end portion and/or the inner lateral surface of the axial end portion. The isolating element can extend from the end portion further down the axial direction into the stator. The isolating element touches at least the front end of the axial end portion of the stator. The isolating element normally connects to the stator in a form-locking way.

That the isolating element has a ring-like structure means that it has a central opening around its axis and that the isolating element can at least accommodate a cylindrical body inside, here the rotor.

That the spring holders extend radially outside the isolating element means that their position as seen in radial direction is at least partially, normally completely, outside the isolating element. Especially the insertion part is normally completely outside the isolating element.

The first axial direction is the direction parallel to the axis of the isolating element pointing in the direction away from the stator when referring to the mounted status of the end element. The second axial direction is the direction parallel to the axis of the isolating element pointing in the direction to the stator when referring to the mounted status of the end element. So first and second axial directions are anti-parallel.

That the spring holders and the isolating element are integral parts of the end element means that the end element is one-part.

Because the extended part of the spring holder can tilt radially inwards it can touch the lateral surface of the stator in the tilted state, so the lateral surface of the stator supports the extended part which reduces stress in the spring holder and in the connection between spring holder and the remaining end element, i.e. the isolating element. One extended part together with the isolating element in the loaded state act as a bracket to hold the stator in position, since the isolating element contacts the stator at its front end and the extended part contacts the stator at its lateral surface. So the end element helps centering the springs and holds the drive unit in position in lateral direction.

One embodiment of the invention consists in that the spring holder includes a hollow body with at least one stiffening rib inside the hollow body extending from one side wall to the opposing side wall of the hollow body. Due to the hollow form the spring holder is strong and lightweight, and the stiffening rib adds stability.

Preferably the stiffening rib extends radially, so the spring holder is especially stable when tilting radially inwards.

One embodiment of the invention consists in that at the side facing the isolating element a cross section of the extended part has the form of a circular arc. The radius of the circular arc should correspond to the radius of the lateral surface of the stator. Since the lateral surface of the stator normally has a cylindrical form the extended part will contact the lateral surface along its surface and thus transfer load across the whole angular range of the circular arc. The angular range, measured with reference to the ring-like isolating element, can be between 10° and 40°, for example between 25° and 35°. In comparison thereto the angular range which is covered by one insertion part of a spring holder normally is one half to one third of the angular range of the circular arc of the extended part. So the angular range which is covered by one insertion part could be between 3° and 20°, for example around 10°.

That the radius of the circular arc should correspond to the radius of the lateral surface of the stator does not mean that the radius should be the same since in that case it would not be possible to mount the end element to the stator or to tilt the extended part radially inwards.

According to one embodiment of the invention the side of the extended part facing the isolating element is tilted radially outwards by a draft angle so that the radius of the side is growing with growing axial distance from the isolating element. This means that at the bottom of the extended part the radial distance to the stator will be smaller and thus keep the stator in position whereas at the top of the extended part the radial distance to the stator will be larger, allowing the extended part to tilt inwards and embrace the stator in case the refrigerant compressor is loaded. The draft angle should be smaller than the tilt angle, e.g. less than half of the tilt angle.

To further enhance the effect of a large area of contact between extended part and the lateral surface of the stator, the extended part can broaden in the direction radially inwards. So the extended part is broader at the side facing the lateral surface of the stator than at the side facing radially outwards.

One embodiment of the invention consists in that each spring holder is partially enclosed by a rim which extends to a web oriented normal to the axis of the isolating element and additionally connecting the spring holder in a symmetric manner to the isolating element. This helps to add stability when the spring holders are tilted since the area of connection between spring holder and isolating element is enlarged. There can be one continuous rim running round the whole circumference of the isolating element enclosing all spring holders. Or there can be a separate rim for each spring holder extending from the spring holder to the left and to the right on the isolating element and ending on the isolating element. When seen in axial direction, the rim can be positioned between insertion part and extended part.

The present invention refers to a refrigerant compressor comprising a hermetically sealed housing and a drive unit disposed in the interior of the housing, the drive unit comprising an electric motor with a stator and an end element according to the invention,
- whereas the end element comprises at least one isolating element which covers an axial end portion of the stator and isolates the stator core and the stator windings,
- whereas each spring holder holds a spring which springs support the electric motor in the housing of the hermetically sealed refrigerant compressor,
- whereas the extended parts of the spring holders in a first position with relation to the stator, when the refrigerant compressor is not loaded, each have a radial distance to the lateral surface of the stator core, and
- whereas the extended part of at least one spring holder in a second position with relation to the stator, when the refrigerant compressor is loaded, contacts the lateral surface of the stator core due to a tilt radially inwards form the first position into the second position.

In the unloaded state of the refrigerant compressor the springs and spring holders only have to carry the weight of the drive unit. In a loaded state of the refrigerant compressor the drive unit is moved with relation to the sealed housing. This can be due to the movement of the drive unit during start or stop of the electric motor, or due to an acceleration of the compressor itself, e.g. if it is mounted in a vehicle and the vehicle accelerates or brakes or goes over a bump. Such a load has vertical and horizontal components. Any vertical load component pressing the drive unit vertically down will result in the extended parts of the spring holders contacting the lateral surface of the stator. The spring holders then act as a bracket to hold the stator in its position inside the sealed housing.

Additionally, the spring holders of the end element according to the invention prevent the springs from falling off the spring holders during transport or high start or stop loads of the compressor.

According to one embodiment of the refrigerant compressor the tilt angle between first position and second position is in the range between 1° and 10°, preferably between 1° and 5°, more preferably between 1° and 3°.

According to one embodiment of the refrigerant compressor in the first position the radial distance between extended part of a spring holder and lateral surface of the stator core is less than 1 mm, preferably less than 0.5 mm. The radial distance need not be constant. Since the present invention is best used for small compressors the radial distance must not be too wide in order to keep the position of the stator stabilized. Small compressors here particularly are understood as having a stator diameter of 40-100 mm and a housing diameter of 80-120 mm.

So according to one embodiment of the refrigerant compressor in the first position the radial distance between the extended part of a spring holder and the lateral surface of the stator core is equal to or more than 0.1 mm.

According to one embodiment of the refrigerant compressor in the first position the side of extended part facing the isolating element is tilted radially outwards by a draft angle so that the radius of the side is growing with growing axial distance from the isolating element.

### BRIEF DESCRIPTION OF THE FIGURES

The invention will now be explained in greater detail using exemplary embodiments. The drawings are meant as examples and are supposed to present the idea of the invention, but by no means to restrict it or to reproduce it in final manner.

In this regard, the figures show:
- Fig. 1: the perspective view of an end element according to the invention,
- Fig. 2: the side view of the end element of Fig. 1,
- Fig. 3: the top view of the end element of Fig. 1,
- Fig. 4: the bottom view of the end element of Fig. 1,
- Fig. 5: the perspective view of a stator with an end element of Fig. 1,
- Fig. 6: the side view of the stator of Fig. 5,
- Fig. 7: the top view of the stator of Fig. 5,
- Fig. 8: the bottom view of the stator of Fig. 5,
- Fig. 9: a longitudinal cross section of a refrigerant compressor with an end element of Fig. 1, the section plane including the axis of the stator but no spring holders,
- Fig. 10: a longitudinal cross section of a refrigerant compressor with an end element of Fig. 1, the section plane being parallel to the section plane of Fig. 9, going through two spring holders,
- Fig. 11: a longitudinal cross section of a refrigerant compressor with an end element of Fig. 1, the section plane including the axis of the stator and two spring holders,
- Fig. 12: a longitudinal section through one spring holder in the unloaded state,
- Fig. 13: a longitudinal section through one spring holder in the loaded state.

### DETAILED DESCRIPTION OF THE FIGURES

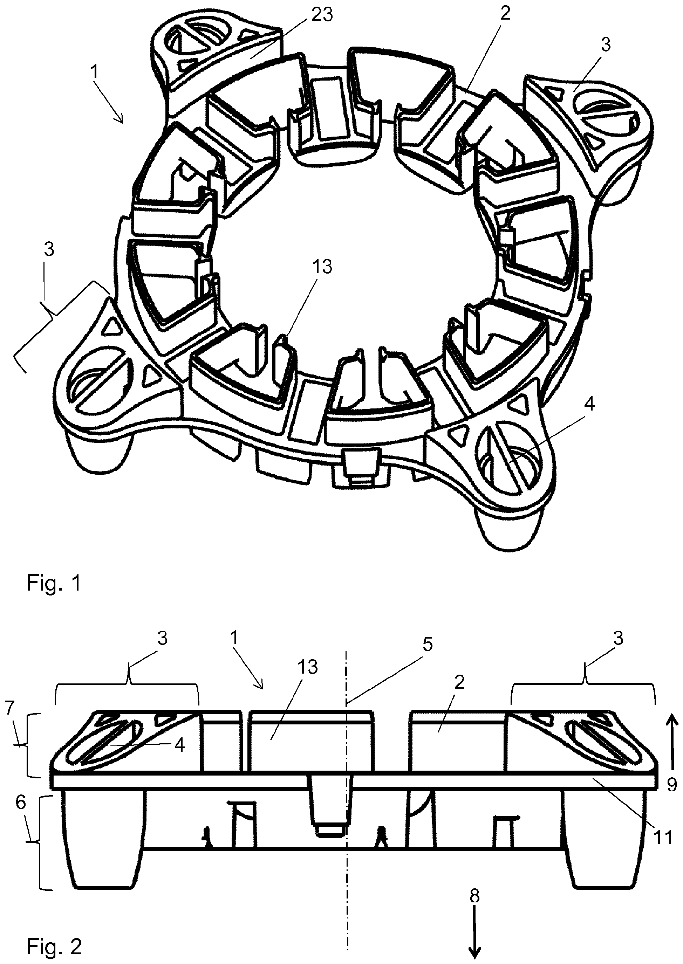

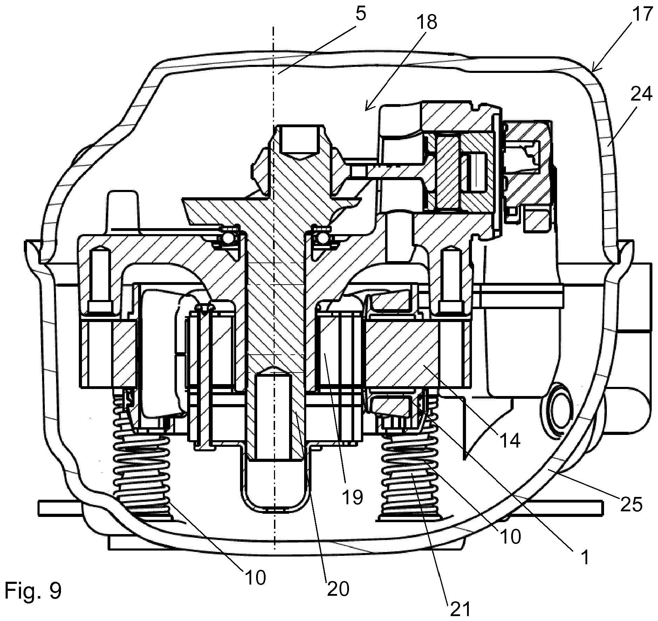

Fig. 1 shows an end element 1 comprising one isolating element 2 having a ring-like structure and four spring holders 3. The spring holders 3 are situated radially outside the isolating element 2. The end element 1 is made of plastic as one part. The end element 1 can be made as a plastic injection moulded part. The end element 1 has protrusions 13 oriented radially inward which align the end element 1 to the stator core of stator 14 (for stator 14 see e.g. Fig. 9) and isolate stator core and stator windings. Each spring holder 3 is mainly a hollow body with at least one stiffening rib 4 inside the hollow body extending from one side wall to the opposing side wall of the hollow body. The stiffening rib 4 extends radially with relation to the axis 5 of the isolating element 2, see Fig. 2.

The side 23 of the extended part 7 of the spring holder 3, see Fig. 2, facing the isolating element 2 has a cross section in the form of a circular arc.

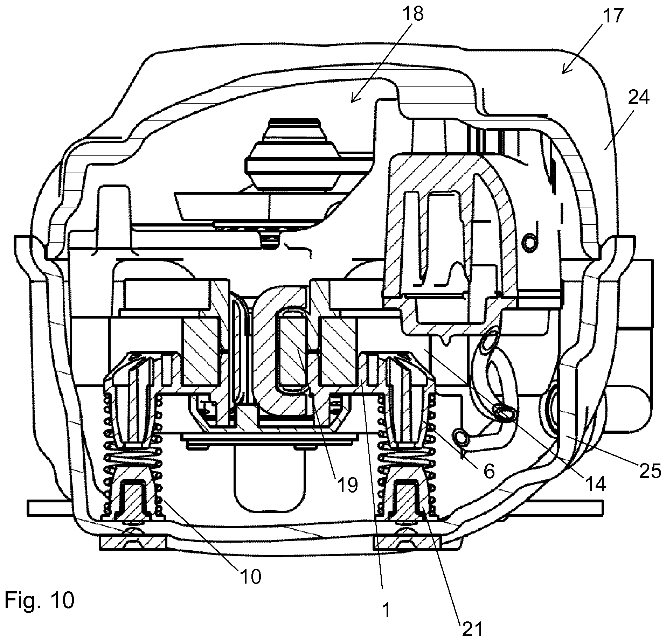

According to Fig. 2, the spring holders 3 are oriented parallel to the axis 5 of the isolating element 2. The insertion part 6 of each spring holder 3 extends in a first axial direction 8 beyond the neighbouring area of the isolating element 2, which first axial direction 8 is downwards here. Here the second axial direction 9, into which the extended part 7 extends, is upwards. The insertion part 6 can be inserted into a helical spring 10, see Fig. 9 and 10. Here the stiffening rib 4 extends through the whole spring holder 3 in axial direction, that is from the extended part 7 down to the bottom of insertion part 6.

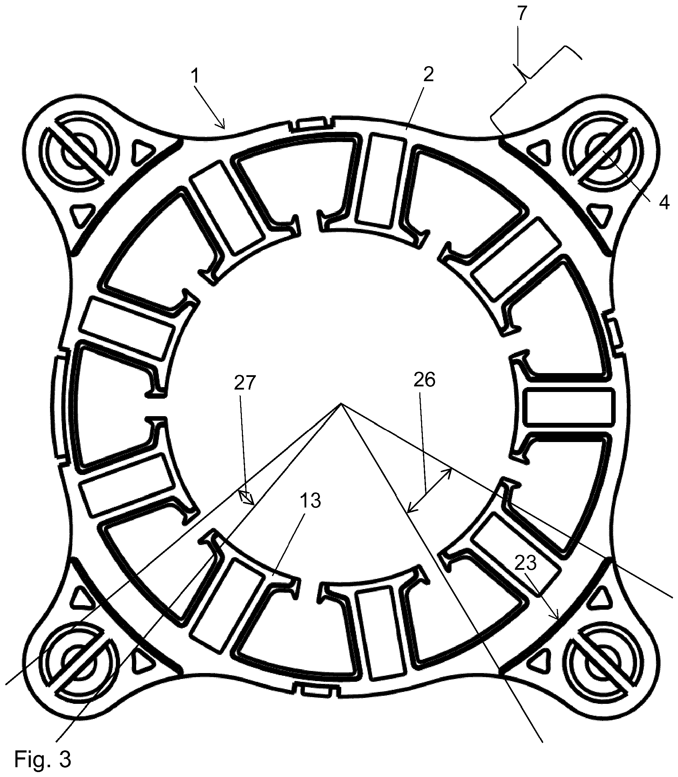

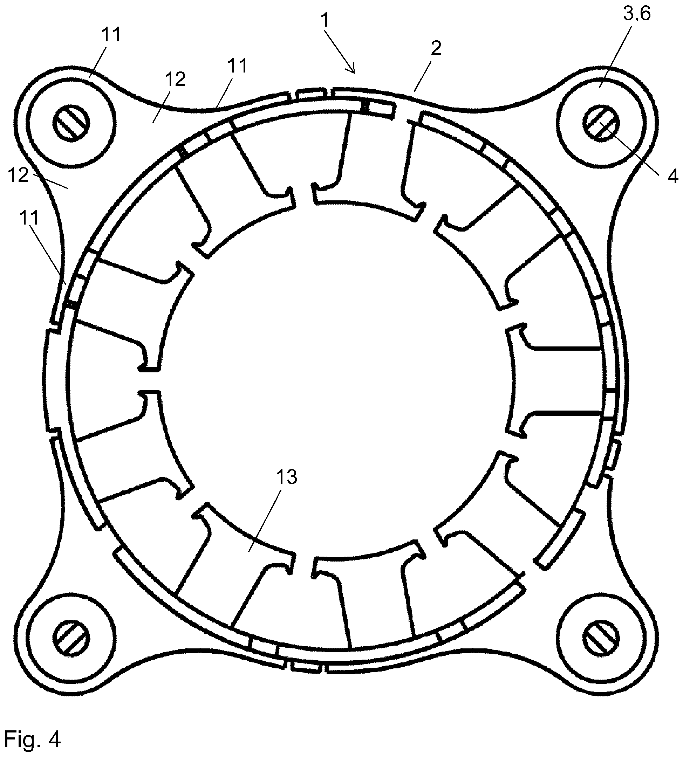

The extended part 7 broadens in the direction radially inwards, which can be seen best in Fig. 3 and 4. Each spring holder 3 is partially enclosed by a rim 11 which extends to a web 12 oriented normal to the axis 5 of the isolating element 2 and additionally connecting the spring holder 3 in a symmetric manner to the isolating element 2, that is, web 12 on one side of the spring holder 3 is symmetric to the web 12 on the other side of the spring holder 3. The axis of symmetry would here contain the stiffening rib 4. The rim 11 separates the spring holder 3 in insertion part 6 and extended part 7, see Fig. 2.

In Fig. 3 the angular range 26 of the circular arc of the side 23 of the extended part 7, measured with reference to the ring-like isolating element 2, i.e. with reference to axis 5, here is about 29°. The angular range 27 of the insertion part 6 here is about 10°.

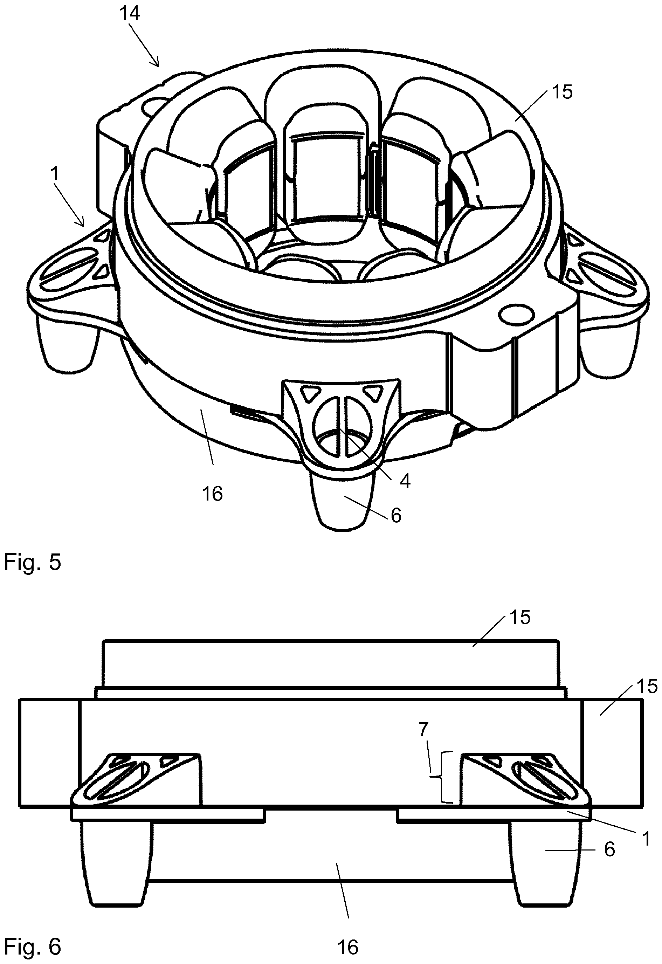

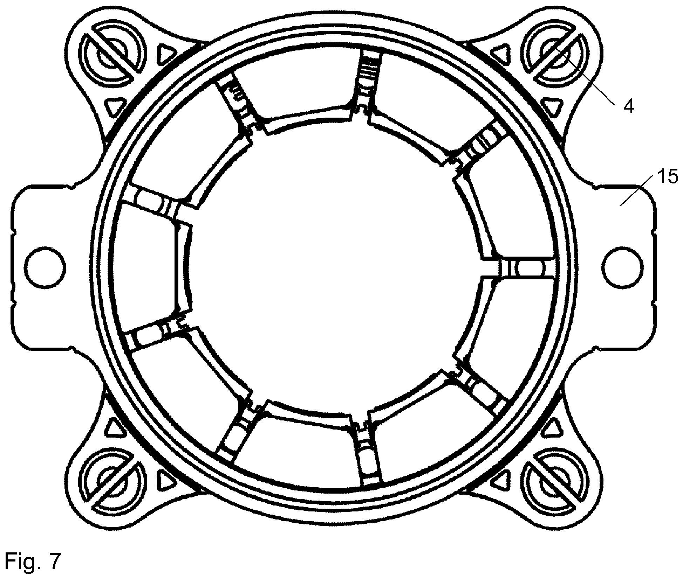

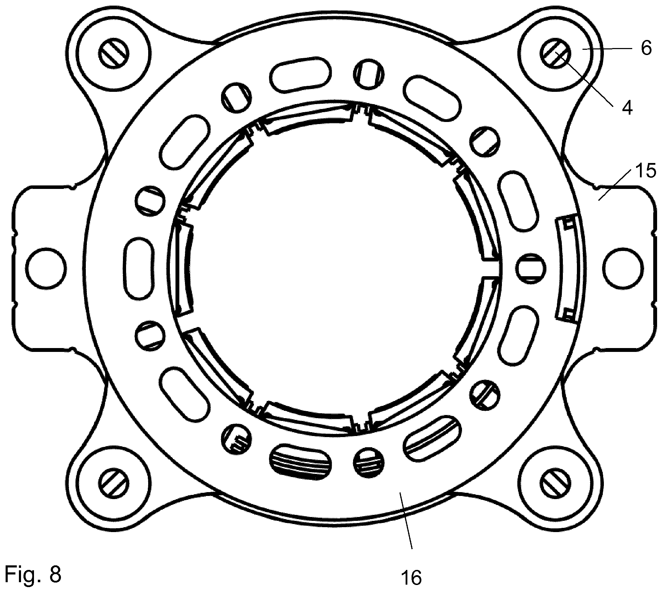

Fig. 5-8 show a stator with an end element 1 according to the invention mounted at one axial end portion of the stator 14, here at the lower end of the stator which is close to the bottom of the refrigerant compressor in the operational status. The stator 14 has a stator core having several pole teeth on its radial inside, said pole teeth being formed by stator webs and salient poles on the inside of the stator opening. In grooves formed between the pole teeth, stator windings are located, each surrounding a stator web. Between the stator core and the stator windings is located an electrical isolation in the form of an upper end element 15 and a lower end element, whereas the lower end element is an end element 1 according to the invention. It is not excluded that additionally the upper end element 15 is made according to the invention. Each end element 1,15 is mounted on an axial end face of the stator core. The two end elements 1,15 are at least very close to each other in the middle of the stator 14. Thus, the two end elements 1,15 form a complete electrical isolation between the stator windings and the stator core. For motors for less than 50 V it is sufficient that the two end elements 1,15 are at least very close to each other. For motors with higher voltage it is favourable that the two end elements 1,15 overlap in the middle of the stator 14. The end elements 1,15 are held at the stator core in a form-fitting manner.

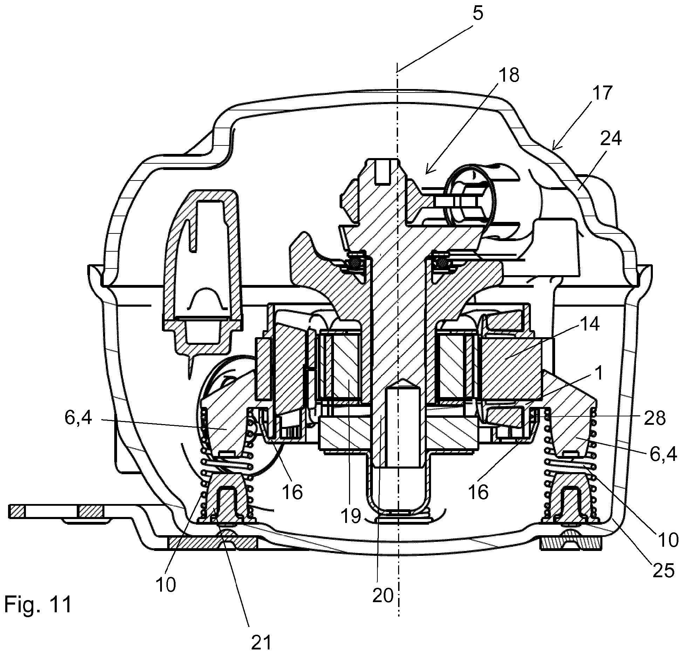

A cover element 16 additionally covers the end element 1 at the bottom. It can be made of plastic and e.g. snapped onto end element 1. Since the electrical connection between the coils of the stator windings of the stator 14 are placed on the outer diameter of the end element 1 the cover element 16 has the function to generate an isolation between these connection wires 28 and the helical springs 10, see Fig. 11.

Fig. 9, 10 and 11 show a refrigerant compressor with a hermetically closed housing 17, here comprising an upper housing part 24 which is welded to a lower housing part 25. Via four helical springs 10 the drive unit 18 is supported on the lower housing part 25 of the housing 17, or rather on its bottom. The drive unit 18 comprises a piston/cylinder unit and the electric motor. The electric motor has a stator 14 and a rotor 19. The rotor 19 is unrotatably connected to a crank shaft 20 and rotates inside a central opening of the stator 14. The rotor 19 here is an IPM (internal permanent magnet) rotor. The end element 1 is mounted on the lower axial end portion of the stator 14.

In the bottom of the refrigerant compressor second spring holders 21 are located, on which the helical springs 10 are mounted. The second spring holders 21 comprise substantially cylindrical sections. Also the insertion part 6 of the spring holder 3 has at least partially a cylindrical form for insertion into the helical spring 10. The end of the insertion part 6 of the spring holder 3 has at least partially an approximate frustoconical form.

In extreme vertical load situations the insertion part 6 of spring holder 3 contacts the second spring holder 21 which gives additional stability to the drive unit 18.

In Fig. 11 the section plane includes the axis 5 of the stator 14 and two spring holders, which means that the section plane of Fig. 11 is turned by 45° with relation to the section plane of Fig. 9. It can be seen in Fig. 11 that the cover element 16 separates connection wires 28 from the helical springs 10.

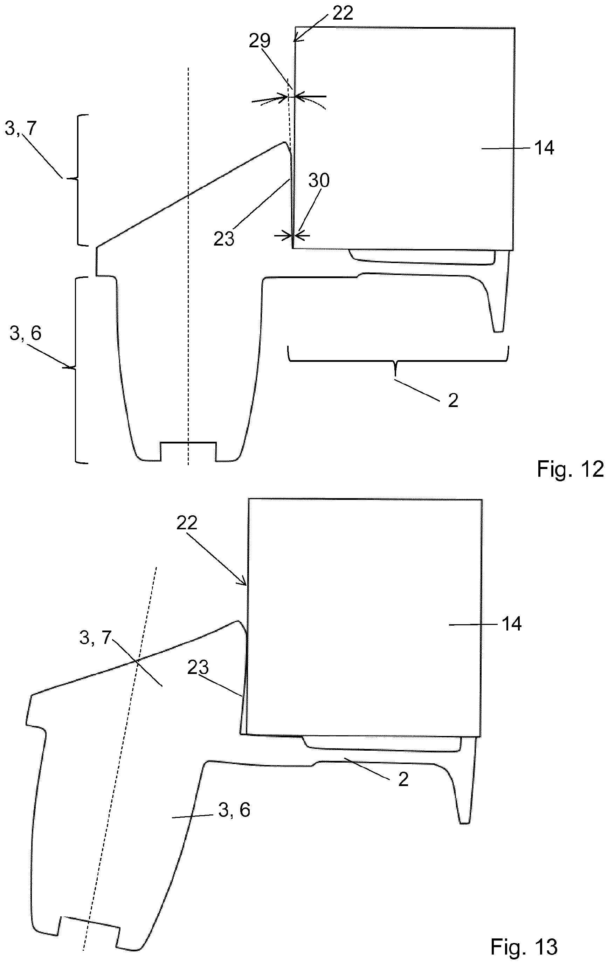

In Fig. 12 and 13 the actual displacement of spring holder 3 has been increased by a factor of 30 to better show the end element 1 in its loaded and thus deformed shape. Fig. 12 shows one spring holder 3 which is tiltable with relation to the isolating element 2. In Fig. 12 the drive unit 18 is not loaded so the extended part 7, namely its side 23, has a radial distance 30 to the lateral surface 22 of stator 14 (only a part of stator 14 is depicted here and in Fig. 13). So in this situation the end element 1, namely the isolating element 2, contacts the stator 14 only at its front end. The radial distance 30 between extended part 7 of spring holder 3, i.e. its side 23, and lateral surface 22 of the stator core of stator 14 here is approximately 0.1 mm at the bottom of the extended part 7. This means that the radius of the circular arc of the side 23 is at least 0.1 mm larger than the radius of the stator 14. This radial distance 30 is needed to allow for mounting the end element 1 to the stator 14 and for tilting the extended part 7 radially inwards.

Generally, in this unloaded first position, side 23 and lateral surface 22 can be parallel to each other or they can be arranged in an angle to each other, as in Fig. 12. This draft angle 29 should be smaller than the tilt angle. In Fig. 12 the side 23 is tilted radially outwards by a draft angle 29 of 0.5°. This means that the radius of the side 23 is growing with growing axial distance from the isolating element 2, i.e. in the direction vertically upwards. So the radial distance 30 between side 23 of extended part 7 and stator 14 is not constant along the axial direction, it increases starting from 0.1 mm at the bottom of extended part 7. In Fig. 12 the axis of the spring holder 3 is depicted as a dotted line and is vertical.

In Fig. 13 the stator 14 is loaded, e.g. pressed downwards against the section of the isolating element 2 contacting the stator 14 on its end face. The spring holder 3 tilts inside from the first position to the second position so the side 23 of the extended part 7 touches the lateral surface 22 of stator 14 and thus embraces the stator 14 at its lateral side 22. The axis of the spring holder 3 is again depicted as a dotted line. The angle between the axis of the spring holder 3 and the vertical is the tilt angle. The spring holder 3, and its side 23, is tilted in the amount of the tilt angle against the vertical direction, i.e. against the first position of Fig. 12. A typical tilt angle for small compressors would be 1.25°.

### LIST OF REFERENCE SYMBOLS

- 1: end element
- 2: isolating element
- 3: spring holder
- 4: stiffening rib
- 5: axis
- 6: insertion part
- 7: extended part
- 8: first axial direction
- 9: second axial direction
- 10: helical spring
- 11: rim
- 12: web
- 13: protrusions
- 14: stator
- 15: upper end element
- 16: cover element
- 17: housing
- 18: drive unit
- 19: rotor
- 20: crank shaft
- 21: second spring holder
- 22: lateral surface
- 23: side of extended part 7
- 24: upper housing part
- 25: lower housing part
- 26: angular range of the circular arc of side 23
- 27: angular range of the insertion part 6
- 28: connection wires
- 29: draft angle
- 30: radial distance

## Claims

1. Refrigerant compressor comprising a hermetically sealed housing (17) and a drive unit (18) disposed in the interior of the housing, the drive unit (18) comprising an electric motor with a stator (14), wherein an end element (1) is mounted on the stator (14),
- whereas the end element (1) comprises at least one isolating element (2) which covers an axial end portion of the stator (14) and isolates a stator core and stator windings,
- whereas the isolating element (2) has a ring-like structure,
- whereas the end element (1) comprises several spring holders (3),
- whereas each spring holder (3) holds a spring (10) which springs support the electric motor in a housing (17) of the hermetically sealed refrigerant compressor,
- whereas the spring holders (3) extend radially outside the isolating element (2),
- whereas the spring holders (3) are oriented parallel to the axis (5) of the isolating element (2) and an insertion part (6) of each spring holder (3) extends in a first axial direction (8) beyond the neighbouring area of the isolating element (2),
- whereas the spring holders (3) and the isolating element (2) are integral parts of the end element (1),
- whereas the spring holders (3) are tiltable with relation to the isolating element (2) so that an extended part (7) of a spring holder, which extended part extends in a second axial direction (9) beyond the neighbouring area of the isolating element (2), can tilt radially inwards so that in the operational state of the end element (1) the extended part (7) of the spring holder (3) can contact a lateral surface (22) of the stator core,
- whereas the extended parts (7) of the spring holders (3) in a first position with relation to the stator (14), when the refrigerant compressor is not loaded, each have a radial distance to the lateral surface (22) of the stator core, and
- whereas the extended part (7) of at least one spring holder (3) in a second position with relation to the stator (14), when the refrigerant compressor is loaded, contacts the lateral surface (22) of the stator core due to a tilt radially inwards form the first position into the second position.

2. Refrigerant compressor according to claim 1, **characterized in that** the tilt angle between first position and second position is in the range between 1° and 10°, preferably between 1° and 5°, more preferably between 1° and 3°.

3. Refrigerant compressor according to claim 1 or 2, **characterized in that** in the first position the radial distance between extended part (7) of a spring holder (3) and lateral surface (22) of the stator core is less than 1 mm, preferably less than 0.5 mm.

4. Refrigerant compressor according to any of claims 1 to 3, **characterized in that** in the first position the radial distance between the extended part (7) of a spring holder (3) and the lateral surface (22) of the stator core is equal to or more than 0.1 mm.

5. Refrigerant compressor according to any of claims 1 to 4, **characterized in that** in the first position the side (23) of extended part (7) facing the isolating element (2) is tilted radially outwards by a draft angle (29) so that the radius of the side (23) is growing with growing axial distance from the isolating element (2).

6. Refrigerant compressor according to any of claims 1 to 5, **characterized in that** the spring holder (3) includes a hollow body with at least one stiffening rib (4) inside the hollow body extending from one side wall to the opposing side wall of the hollow body.

7. Refrigerant compressor according to claim 6, **characterized in that** the stiffening rib (4) extends radially.

8. Refrigerant compressor according to any of claims 1 to 7, **characterized in that** at the side (23) facing the isolating element (2) a cross section of the extended part (7) has the form of a circular arc.

9. Refrigerant compressor according to claim 8, **characterized in that** the angular range (26) of the circular arc, measured with reference to the ring-like isolating element (2), is between 10° and 40°, preferably between 25° and 35°.

10. Refrigerant compressor according to any of claims 1 to 9, **characterized in that** the extended part (7) broadens in the direction radially inwards.

11. Refrigerant compressor according to any of claims 1 to 10, **characterized in that** each spring holder (3) is partially enclosed by a rim (11) which extends to a web (12) oriented normal to the axis (5) of the isolating element (2) and additionally connects the spring holder (3) in a symmetric manner to the isolating element (2).

## Patentansprüche

1. Kältemittelverdichter mit einem hermetisch abgedichteten Gehäuse (17) und einer im Inneren des Gehäuses angeordneten Antriebseinheit (18), wobei die Antriebseinheit (18) einen Elektromotor mit einem Stator (14) umfasst, wobei an dem Stator (14) ein Endelement (1) angebracht ist,
- wobei das Endelement (1) mindestens ein Isolierelement (2) umfasst, das einen axialen Endabschnitt des Stators (14) abdeckt und einen Statorkern und Statorwicklungen isoliert,
- wobei das Isolierelement (2) eine ringförmige Struktur aufweist,
- wobei das Endelement (1) mehrere Federhalterungen (3) umfasst,
- wobei jede Federhalterung (3) eine Feder (10) hält, wobei die Federn den Elektromotor in einem Gehäuse (17) des hermetisch abgedichteten Kältemittelverdichters abstützen,
- wobei sich die Federhalterungen (3) radial außerhalb des Isolierelements (2) erstrecken,
- wobei die Federhalterungen (3) parallel zur Achse (5) des Isolierelements (2) ausgerichtet sind und sich ein Einsteckteil (6) jeder Federhalterung (3) in einer ersten axialen Richtung (8) über den angrenzenden Bereich des Isolierelements (2) hinaus erstreckt,
- wobei die Federhalterungen (3) und das Isolierelement (2) integrale Bestandteile des Endelements (1) sind,
- wobei die Federhalterungen (3) in Bezug auf das Isolierelement (2) kippbar sind, so dass ein erweiterter Teil (7) einer Federhalterung, der sich in einer zweiten axialen Richtung (9) über den angrenzenden Bereich des Isolierelements (2) hinaus erstreckt, radial nach innen kippen kann, so dass im Betriebszustand des Endelements (1) der erweiterte Teil (7) der Federhalterung (3) eine Seitenfläche (22) des Statorkerns berühren kann,
- wobei die erweiterten Teile (7) der Federhalterungen (3) in einer ersten Position in Bezug auf den Stator (14), wenn der Kältemittelverdichter nicht belastet ist, jeweils einen radialen Abstand zur Seitenfläche (22) des Statorkerns aufweisen, und
- wobei der erweiterte Teil (7) mindestens einer Federhalterung (3) in einer zweiten Position in Bezug auf den Stator (14), wenn der Kältemittelverdichter belastet ist, die Seitenfläche (22) des Statorkerns aufgrund eines Kippens radial nach innen von der ersten Position in die zweite Position berührt.

2. Kältemittelverdichter nach Anspruch 1, **dadurch gekennzeichnet, dass** der Kippwinkel zwischen der ersten Position und der zweiten Position im Bereich zwischen 1° und 10°, vorzugsweise zwischen 1° und 5°, besonders bevorzugt zwischen 1° und 3° liegt.

3. Kältemittelverdichter nach Anspruch 1 oder 2, **dadurch gekennzeichnet, dass** in der ersten Position der radiale Abstand zwischen dem erweiterten Teil (7) einer Federhalterung (3) und der Seitenfläche (22) des Statorkerns weniger als 1 mm, vorzugsweise weniger als 0,5 mm beträgt.

4. Kältemittelverdichter nach einem der Ansprüche 1 bis 3, **dadurch gekennzeichnet, dass** in der ersten Position der radiale Abstand zwischen dem erweiterten Teil (7) einer Federhalterung (3) und der Seitenfläche (22) des Statorkerns gleich oder größer als 0,1 mm ist.

5. Kältemittelverdichter nach einem der Ansprüche 1 bis 4, **dadurch gekennzeichnet, dass** in der ersten Position die dem Isolierelement (2) zugewandte Seite (23) des erweiterten Teils (7) um einen Konizitätswinkel (29) radial nach außen geneigt ist, so dass der Radius der Seite (23) mit zunehmendem axialen Abstand vom Isolierelement (2) zunimmt.

6. Kältemittelverdichter nach einem der Ansprüche 1 bis 5, **dadurch gekennzeichnet, dass** die Federhalterung (3) einen Hohlkörper mit mindestens einer Versteifungsrippe (4) im Inneren des Hohlkörpers umfasst, die sich von einer Seitenwand zur gegenüberliegenden Seitenwand des Hohlkörpers erstreckt.

7. Kältemittelverdichter nach Anspruch 6, **dadurch gekennzeichnet, dass** sich die Versteifungsrippe (4) radial erstreckt.

8. Kältemittelverdichter nach einem der Ansprüche 1 bis 7, **dadurch gekennzeichnet, dass** an der dem Isolierelement (2) zugewandten Seite (23) ein Querschnitt des erweiterten Teils (7) die Form eines Kreisbogens aufweist.

9. Kältemittelverdichter nach Anspruch 8, **dadurch gekennzeichnet, dass** der Winkelbereich (26) des Kreisbogens, gemessen in Bezug auf das ringförmige Isolierelement (2), zwischen 10° und 40°, vorzugsweise zwischen 25° und 35° liegt.

10. Kältemittelverdichter nach einem der Ansprüche 1 bis 9, **dadurch gekennzeichnet, dass** sich der erweiterte Teil (7) in radialer Richtung nach innen verbreitert.

11. Kältemittelverdichter nach einem der Ansprüche 1 bis 10, **dadurch gekennzeichnet, dass** jede Federhalterung (3) teilweise von einem Rand (11) umschlossen ist, der sich bis zu einem Steg (12) erstreckt, der senkrecht zur Achse (5) des Isolierelements (2) ausgerichtet ist, und die Federhalterung (3) in symmetrischer Weise zusätzlich mit dem Isolierelement (2) verbindet.

## Revendications

1. Compresseur frigorifique comprenant un logement (17) hermétiquement étanche et une unité d'entraînement (18) disposée à l'intérieur du logement, l'unité d'entraînement (18) comprenant un moteur électrique avec un stator (14), dans lequel un élément d'extrémité (1) est monté sur le stator (14),
- dans lequel l'élément d'extrémité (1) comprend au moins un élément isolant (2) qui couvre une portion d'extrémité axiale du stator (14) et isole un noyau de stator et des enroulements de stator,
- dans lequel l'élément isolant (2) a une structure de type anneau,
- dans lequel l'élément d'extrémité (1) comprend plusieurs supports de ressort (3),
- dans lequel chaque support de ressort (3) supporte un ressort (10), lesquels ressorts soutiennent le moteur électrique dans un logement (17) du compresseur frigorifique hermétiquement étanche,
- dans lequel les supports de ressort (3) s'étendent radialement à l'extérieur de l'élément isolant (2),
- dans lequel les supports de ressort (3) sont orientés parallèlement à l'axe (5) de l'élément isolant (2) et une partie d'insertion (6) de chaque support de ressort (3) s'étend dans une première direction axiale (8) au-delà de la zone voisine de l'élément isolant (2),
- dans lequel les supports de ressort (3) et l'élément isolant (2) sont des parties intégrantes de l'élément d'extrémité (1),
- dans lequel les supports de ressort (3) sont inclinables par rapport à l'élément isolant (2) de sorte qu'une partie étendue (7) d'un support de ressort, laquelle partie étendue s'étend dans une seconde direction axiale (9) au-delà de la zone voisine de l'élément isolant (2), peut s'incliner radialement vers l'intérieur de sorte que dans l'état opérationnel de l'élément d'extrémité (1), la partie étendue (7) du support de ressort (3) peut entrer en contact avec une surface latérale (22) du noyau de stator,
- dans lequel les parties étendues (7) des supports de ressort (3) dans une première position par rapport au stator (14), lorsque le compresseur frigorifique n'est pas chargé, ont chacune une distance radiale vis-à-vis de la surface latérale (22) du noyau de stator, et
- dans lequel la partie étendue (7) d'au moins un support de ressort (3) dans une seconde direction par rapport au stator (14), lorsque le compresseur frigorifique est chargé, entre en contact avec la surface latérale (22) du noyau de stator en raison d'une inclinaison radialement vers l'intérieur de la première position à la seconde position.

2. Compresseur frigorifique selon la revendication 1, **caractérisé en ce que** l'angle l'inclinaison entre la première position et la seconde position est dans la plage entre 1° et 10°, préférentiellement entre 1° et 5°, plus préférentiellement entre 1° et 3°.

3. Compresseur frigorifique selon la revendication 1 ou 2, **caractérisé en ce que** dans la première position, la distance radiale entre la partie étendue (7) d'un support de ressort (3) et la surface latérale (22) du noyau de stator est inférieure à 1 mm, préférentiellement inférieure à 0,5 mm.

4. Compresseur frigorifique selon l'une quelconque des revendications 1 à 3, **caractérisé en ce que** dans la première position, la distance radiale entre la partie étendue (7) d'un support de ressort (3) et la surface latérale (22) du noyau de stator est supérieure ou égale à 0,1 mm.

5. Compresseur frigorifique selon l'une quelconque des revendications 1 à 4, **caractérisé en ce que** dans la première position, le côté (23) de la partie étendue (7) en regard de l'élément isolant (2) est incliné radialement vers l'extérieur d'un angle de dégagement (29) de sorte que le rayon du côté (23) est croissant avec une distance axiale croissante depuis l'élément isolant (2).

6. Compresseur frigorifique selon l'une quelconque des revendications 1 à 5, **caractérisé en ce que** le support de ressort (3) inclut un corps creux avec au moins une nervure de raidissement (4) à l'intérieur du corps creux s'étendant d'une paroi de côté à la paroi de côté opposée du corps creux.

7. Compresseur frigorifique selon la revendication 6, **caractérisé en ce que** la nervure de raidissement (4) s'étend radialement.

8. Compresseur frigorifique selon l'une quelconque des revendications 1 à 7, **caractérisé en ce que** du côté (23) en regard de l'élément isolant (2), une section de la partie étendue (7) a la forme d'un arc circulaire.

9. Compresseur frigorifique selon la revendication 8, **caractérisé en ce que** la plage angulaire (26) de l'arc circulaire, mesurée en référence à l'élément isolant (2) de type anneau, est entre 10° et 40°, préférentiellement entre 25° et 35°.

10. Compresseur frigorifique selon l'une quelconque des revendications 1 à 9, **caractérisé en ce que** la partie étendue (7) s'élargit dans la direction radialement vers l'intérieur.

11. Compresseur frigorifique selon l'une quelconque des revendications 1 à 10, **caractérisé en ce que** chaque support de ressort (3) est partiellement enfermé par un rebord (11) qui s'étend jusqu'à une âme (12) orientée perpendiculaire à l'axe (5) de l'élément isolant (2) et relie de plus le support de ressort (3) de manière symétrique à l'élément isolant (2).
